# EUROPEAN PATENT SPECIFICATION

(11) **EP 4 285 062 B1**
(45) Date of publication and mention of the grant of the patent: **02.04.2025**
(21) Application number: 22707219.6
(22) Date of filing: 26.01.2022
(51) Int. Cl.: F26B 1/00, F26B 3/08, F26B 5/04, F26B 17/12, F26B 17/14

(54) **INSTALLATION AND PROCESS FOR CRYSTALLIZING AND DRYING GRANULAR POLYMER MATERIAL**
ANLAGE UND VERFAHREN ZUM KRISTALLISIEREN UND TROCKNEN VON GRANULAT POLYMERMATERIAL
INSTALLATION ET PROCÉDÉ POUR LA CRISTALLISATION ET LE SÉCHAGE DE MATÉRIAU POLYMÈRE GRANULAIRE

(30) Priority: 26.01.2021 IT 202100001451
(43) Date of publication of application: 06.12.2023
(73) Proprietor: Pegaso Industries S.p.A., 35010 Borgoricco (PD) (IT)
(72) Inventor: PIVA, Rinaldo, 35010 Borgoricco (PD) (IT)
(74) Representative: Morabito, Sara
(86) International application number: PCT/IB2022/050666
(87) International publication number: WO 2022/162544

(56) References cited:
- WO-A1-2018/193396
- US-A- 2 871 575
- US-A1- 2014 084 504
- US-B1- 6 745 492
- US-B2- 9 242 218

## Description

### Technical field

The present invention relates to an installation and a process for crystallizing and drying granular polymer material having the features set out in the preamble of the independent claims, respectively.

### Technological background

The invention is particularly used in industrial processes for transforming granular plastics materials by means of extrusion or moulding.

It is known that such operations, in order to ensure an adequate level of quality of the moulded product, require that the plastics material introduced into the moulds is free from humidity to the greatest possible extent.

However, this requirement is difficult to reconcile with the high hygroscopic properties of some plastics materials which are widely used in the sector, such as, for example, materials based on polyethylene terephthalate (PET) or polyamide (PA) or polycarbonate (PC) or some copolymers, such as ABS (acrylonitrile butadiene styrene).

Therefore, these plastics materials, before being subjected to the extrusion or moulding process, have to be adequately dried in suitable drying installations, where the water content of the granules is reduced to the minimum quantities required by the transformation process.

In a commonly used process, the drying of the granular polymer material is carried out inside a hopper, in which the material to be dried is contained and in which a continuous flow of hot and dry air is introduced.

The subsequent transformation process for the dried polymer material provides for the material to be brought to a molten or semi-molten state in order to be able to be introduced into a mould or extruded through a shaped head. These processes require a high level of energy supply for melting the material, which is particularly difficult if obtained inside an extruder, so much so that the total cost of the transformation process is largely determined by the energy share.

Also for this reason, it is desirable to supply the transformation machine with granular polymer material at the maximum possible temperature.

However, the polymer material, if it is maintained at high temperatures for long times, for example, of two to three hours typical of the drying processes, is subjected to oxidation and degradation phenomena.

Generally, for each polymer there is defined a "maximum air preservation temperature" which must not be exceeded during the drying process. The value of this temperature depends on the specific type of polymer and is supplied by the manufacturer of the granular material to be processed.

Another important disadvantage of the conventional drying process involves the long times required for the production changes, which impair the overall operational flexibility of the processing process of the plastics material.

In fact, the production change operation may require different times for completely purging the drying hopper, filling it with the new granular material to be dried and then heating this material in order to bring it to the desired drying degree.

Furthermore, the Applicant has observed that in recent years this disadvantage has become more and more relevant because the installations are often required to carry out many production operations involving relatively small quantities of different materials.

A drying installation which is configured to increase the efficiency of the process and which allows, at the same time, changes of production operations to be carried out within very short times is described in WO 2018/193396 in the name of the same Applicant.

Another disadvantage of the known drying processes involves the fact that the granules of some polymers, such as, for example, polyethylene terephthalate (PET), when subjected to the temperatures necessary to obtain the required level of drying, tend to agglomerate, joining together to form polymer blocks with large dimensions, also in the worst cases resulting in a single polymer block being formed inside the hopper.

This event is highly undesirable because it involves different and serious disadvantages during the drying process, including an incorrect discharge of the material (or even the blocking thereof) and insufficient and nonhomogeneous drying of the material.

In fact, this brings about an extended blocking of the production, which is caused by the need to intervene, generally manually, in order to empty the hopper which contains the polymer material which has become consolidated into blocks.

In order to prevent this phenomenon, it is necessary for these polymers to have a level of crystallinity greater than a specific value, which generally varies from polymer to polymer. For example, in the case of PET, it is required that the level of crystallinity be greater than or equal to 50% in order to be able to be brought to the temperatures necessary for achieving an adequate level of drying.

At times, however, the PET to be processed has a level of crystallinity less than this value, for example, when it originates from recycled material.

In these cases, it is known to subject the granular material with a low level of crystallinity to a crystallization process (otherwise known as re-gradation) before being dried.

The crystallization process provides for bringing the granular material to a suitable temperature and for maintaining it at this temperature for an adequate time during operation with constant agitation. In the case of PET, for example, the granular material is brought to approximately from 135°C to 140°C for a suitable time, as a function of the initial level of crystallinity.

The agitation of the granular material during the crystallization period can be obtained by means of fluidized bed techniques or by using bladed mixers and serves to prevent the granules of polymer material from bonding to each other. What has been set out above indicates that, in order to dry a granular polymer material with a low level of crystallinity, it is necessary to subject this material beforehand to a crystallization processing operation which, however, involves the acquisition and installation of a dedicated installation and the connection thereof to the drying installation which is downstream, with possible problems of operative integration between the two installations and with an increase in processing costs and times.

In the present description and the appended claims, the term "granular material" is intended to be a plurality of solid elements which are different and separate from each other and which have suitable dimensions and formations, in accordance with the processing operation to be carried out and the polymer material used, including polymer material in powdered or flaked form.

A granular material is "kept agitated" when the granules are subjected to movement so as to limit the extended mutual contact between adjacent granules.

This movement can be continuous or discontinuous and has to be understood with reference to the total mass of the granular material being moved and not to circumscribed regions of this mass which, for limited times, may be moved only slightly or not at all.

The term "maximum air preservation temperature" is intended to be the maximum temperature at which the granular polymer material can be preserved in air for a significant time without being subjected to relevant degradation phenomena.

The "level of crystallinity" of a polymer is generally defined as the weight fraction of polymer in the crystalline state with respect to the total polymer mass. The level of crystallinity can be measured in different manners and is generally supplied by the manufacturer of the granular polymer material.

The term "threshold value" with reference to the level of crystallinity is intended to be the value of the level of crystallinity below which the granular polymer material can involve the formation of blocks of granules during the drying process.

Generally, the threshold value may depend on the granular polymer material and the drying process.

In the present description and in the appended claims, a polymer is defined as having a "low level of crystallinity" when the level of crystallinity thereof is less than the threshold value as defined above.

For example, in the case of PET, this threshold value is equal to approximately 50%.

The term "crystallization" is therefore intended to be understood to be the process, as a result of which the level of crystallinity of a granular polymer material is increased at least up to this minimum value.

The granular polymer material which is subjected to the crystallization process is also referred to as being "crystallized".

The term "dehumidification" is intended to be the process, as a result of which the humidity content of the granular polymer material is reduced by substantially eliminating the water present in the surface region of the granules.

By way of reference, this reduction is generally in the order of approximately from 40 to 60% of the initial humidity content with residual humidity values of approximately 1000 ppm (parts per million).

Furthermore, the term "drying" is intended to be the process, as a result of which the humidity content of the granular polymer material is reduced to the desired values by the subsequent transformation process (moulding or extrusion) by means of substantial elimination of the water present in the internal regions of the granules.

By way of reference, the maximum residual humidity value required by the transformation machine may be approximately from 50 to 100 ppm (parts per million).

The term "inert atmosphere" is intended to be understood to be a gas, wherein the composition thereof, at the temperature and at the time provided for contact with the granular polymer material, does not give rise to appreciable oxidation or degradation phenomena. An example of an inert atmosphere is industrial nitrogen which has substantially no oxygen.

### Disclosure of the invention

The problem addressed by the present invention is to provide an installation and a process for crystallizing and drying granular polymer material which is structurally and functionally configured to at least partially overcome one or more of the disadvantages set out above with reference to the cited prior art. This problem is solved by the present invention by means of an installation and a process according to the appended claims.

In a first aspect thereof, the present invention relates to an installation configured for crystallizing and drying granular polymer material with a low level of crystallinity, that is a level of crystallinity less than a threshold value below which the granular polymer material can involve the formation of blocks of granules during the drying process, wherein the level of crystallinity is defined as the weight fraction of polymer in the crystalline state with respect to the total polymer mass.

This installation comprises at least one crystallization hopper in which the granular polymer material is subjected to a crystallization process so as to increase the individual level of crystallinity and to make it suitable for a drying process.

The crystallization hopper is connected to a crystallization line, via which there is introduced into the crystallization hopper a first gas flow which is heated to a first temperature which is suitable for crystallizing the granular polymer material placed inside the crystallization hopper.

This installation comprises an agitation member which is associated with the crystallization hopper and which is provided to keep the granular material moving inside the crystallization hopper.

The installation further comprises at least one heating hopper which is arranged downstream of the crystallization hopper and which is provided with a heating unit in order to heat the crystallized granular polymer material to a second temperature which is greater than the first temperature.

The installation further comprises a drying hopper which is arranged downstream of the heating hopper and which is connected to a depressurization circuit which allows a level of pressure reduction so as to dry the granular polymer material to be obtained in the drying hopper.

The installation further comprises at least one supply hopper which is arranged downstream of the drying hopper and upstream of a transformation machine for the granular polymer material.

In a second aspect thereof, the invention is directed towards a process for crystallizing and drying granular polymer material with a low level of crystallinity, that is a level of crystallinity less than a threshold value below which the granular polymer material can involve the formation of blocks of granules during the drying process, wherein the level of crystallinity is defined as the weight fraction of polymer in the crystalline state with respect to the total polymer mass.

This process comprises the step of maintaining the granular polymer material with a low level of crystallinity in an agitated state.

At the same time as maintaining the granular polymer material in an agitated state, there is introduced into the granular polymer material a first gas flow having a first temperature.

The level of crystallinity of the granular polymer material can thereby be increased up to a value greater than the predefined threshold value so as to make the granular polymer material suitable for being subjected to drying.

This process further comprises the step of heating the crystallized granular polymer material to a second temperature which is greater than the first temperature.

This process further comprises the step of drying the crystallized and heated granular polymer material by applying a predefined level of reduced pressure.

This process further comprises the step of transferring the dried granular polymer material into a supply hopper which is provided upstream of a transformation machine of the granular polymer material.

As a result of the features of the installation and the process of the invention, the granular polymer material with a low level of crystallinity can be crystallized and dried efficiently both from the point of view of energy and from the point of view of the installation and operation.

In fact, the crystallization step is also used, in addition to being used for increasing the degree of crystallization of the polymer, to dehumidify the granular material, that is to say, to substantially eliminate the portion of water placed in the surface region of the granules, leaving the objective of substantially reducing the water content inside the granules to the actual drying step itself.

In fact, the first temperature to which the granular material is brought for the crystallization step is sufficient to evaporate the surface portion of the humidity of the granules.

As a result of this step, the granular material can be brought to a higher temperature which is suitable for obtaining the efficient drying thereof without being subjected to phenomena of solidifying the material.

Furthermore, the step of drying is carried out under reduced pressure conditions so as to result in levels of drying of the granular material which are particularly high without any need to further increase the temperature.

The subdivision of the process into different stages further allows the advantageous use of hoppers having relatively small dimensions, which allows the granular polymer material being processed to be able to be varied in much more rapid times, thereby increasing, for the same production capacity, the processing flexibility of the installation.

In particular, the Applicant has established that the times for changing production are also reduced by from 70% to 80% with the installation of the invention with respect to a conventional crystallization and drying installation. Furthermore, the installation of the invention allows optimum integration between the crystallization and drying steps.

In at least one of the aspects mentioned above, the present invention may have one or more of the preferred features set out below.

Preferably, the agitation member comprises a bladed shaft which rotates inside the crystallization hopper.

The bladed shaft may be produced in any form suitable for keeping the granular material moving inside the crystallization hopper.

Preferably, the crystallization line is supplied with air which is taken from the environment and which does not come from the crystallization hopper.

In other words, the first gas flow, once it has been discharged from the crystallization hopper, is not recirculated.

In particular, therefore, the first gas flow is preferably formed by air which is drawn from the environment, simply heated, introduced into the crystallization hopper in contact with the granular polymer material and finally returned to the environment.

This advantageously allows the polymer material to be dehumidified, in addition to it being crystallized, because the level of humidity of the ambient air heated to the first temperature is such as to remove the portion of water present on the surface of granules without using costly dehumidification and recirculation processing operations.

Preferably, the first gas flow is heated with a heat pump.

The energy supply required for heating the first air flow to the first temperature is thereby minimized.

Preferably, the granular polymer material is heated to the second temperature by means of a second gas flow which is introduced into the granular polymer material via a recirculation circuit.

In particular, there is provision for the heating unit to comprise a recirculation circuit, through which the second gas flow is introduced into the heating hopper, is recovered at the discharge from the heating hopper and is recirculated in the same heating hopper after being heated to the second temperature.

In greater detail, the recirculation circuit comprises a heating line, a heater, a recovery line and a fan.

In this manner, the thermal energy supplied to the gas which is introduced into the heating hopper is largely recovered. Furthermore, under consideration of the fact that a large portion of the content of water present in the granule has been removed in the preceding dehumidification stage, the gas being discharged from the heating hopper does not have high humidity values, as a result of which it can be re-introduced into the hopper (after a new heating operation) without any previous dehumidification processing operation.

Preferably, the second gas flow is formed by air.

Preferably, the second temperature to which the granular polymer material is heated after being dehumidified corresponds to the individual maximum air preservation temperature of the granular polymer material.

In this manner, the granular material is prepared for the subsequent drying step under reduced pressure under the highest possible temperature conditions.

Preferably, there are provided upstream and downstream of the drying hopper a charging unit and a discharging unit of the drying hopper, respectively. More preferably, both the charging unit and the discharging unit comprise a respective tank which is intercepted upstream and downstream by respective closure valves.

Preferably, the charging unit and the discharging unit form elements for maintaining the pressure which are capable of maintaining the degree of reduced pressure reached inside the drying hopper.

As a result of this feature, it is possible to obtain very high levels of reduced pressure, reaching an absolute pressure less than 30 mbar, for example, an absolute pressure of approximately 10 mbar.

Preferably, the ratio between the volume of each of the tanks and the volume of the drying hopper is between 0.02 and 0.15.

The granular polymer material is thereby added and removed in small quantities but at a high frequency, simulating a virtually continuous drying process, with all the advantages which result therefrom in terms of efficiency and control of the process, as well as in terms of operational flexibility.

Preferably, the granular polymer material is transported from the heating hopper to the drying hopper by means of the second gas flow.

In an embodiment of the invention, the granular polymer material, during or after the drying step, is subjected to a post-heating step.

As a result of this step, the granular polymer material can be maintained at or brought to a high temperature, preferably to the maximum air preservation temperature, so as to be ready for use in the transformation machine.

In an embodiment of the invention, the granular polymer material is post-heated by irradiation with microwaves.

Advantageously, the irradiation step with microwaves is carried out by means of a suitable irradiation unit which is associated with the drying hopper and is carried out during the drying step under reduced pressure.

In another embodiment of the invention, alternatively or additionally to the preceding one, the post-heating step is carried out in the supply hopper.

In a preferred embodiment, the granular polymer material is post-heated under an inert atmosphere to a temperature greater than the maximum air preservation temperature.

Preferably, the inert atmosphere is maintained inside the supply hopper by means of an inert gas supply circuit.

This allows a granular polymer material to be introduced into the transformation machine downstream at a temperature closer to the melting temperature. In this manner, the energy supply required from the transformation machine is lower and, in particular, the Applicant has verified how heating the granular polymer material in the drying installation leads to a total energy balance which is lower than heating the granular polymer material in the transformation machine. This advantage is even more evident if the melting of the granular polymer material is obtained inside an extruder, where the increase in the temperature mainly results from the friction generated in the granules from the action of the screw which urges them against the internal wall.

The presence of inert atmosphere inside the supply hopper prevents any phenomena of oxidation and degradation of the granular polymer material notwithstanding the high temperatures to which it is heated.

Preferably, the temperature to which the granular polymer material is post-heated under an inert atmosphere is less than the melting temperature thereof by a value less than 50°C.

It is thereby possible to bring the temperature of the polymer material to be introduced into the transformation machine to the highest possible value but without causing melting of the material in the hopper.

In a particularly preferred embodiment, the granular polymer material with a low level of crystallinity is based on polyethylene terephthalate (PET).

In particular, the granular polymer material comprises a relevant percentage of recycled PET.

In this embodiment, the first temperature to which the granular material is brought inside the crystallization hopper is between 130°C and 150°C, more preferably between 135°C and 140°C and in the crystallization hopper the level of crystallinity of the PET is brought to a value greater than 50% which represents the threshold value of PET.

### Brief description of the drawings

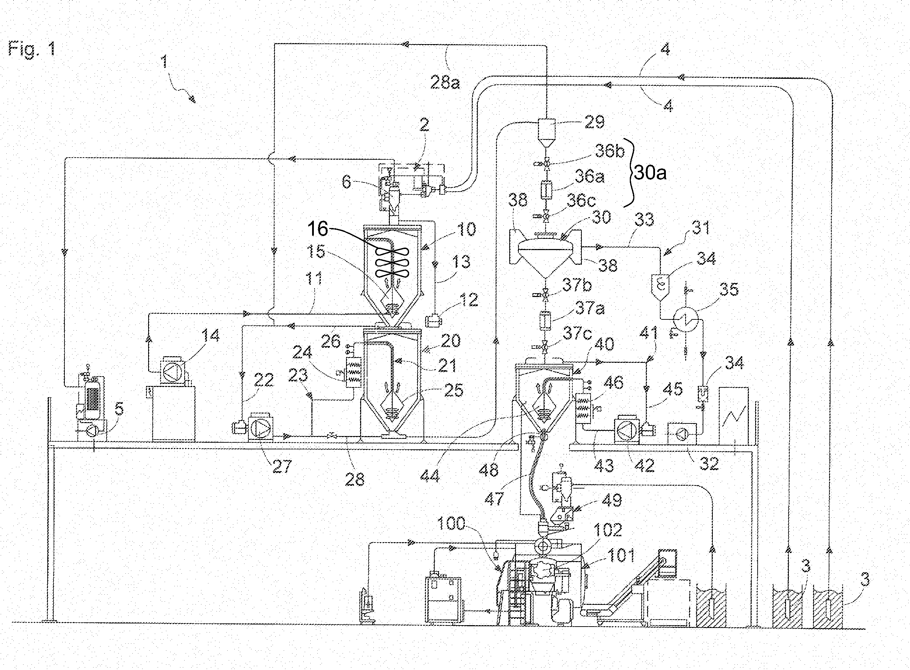

The features and advantages of the invention will be better appreciated from the detailed description of a preferred embodiment thereof which is illustrated by way of non-limiting example with reference to the appended drawings, in which Figure 1 is a schematic view of an installation for crystallizing and drying granular polymer material according to the present invention.

### Preferred embodiments of the invention

With reference to Figure 1, there is generally designated 1 an installation for crystallizing and drying granular polymer material constructed according to the present invention.

The installation 1 is provided to dry any polymer material in granules with a low level of crystallinity and which requires a crystallization step in order to be able to be dried.

In the preferred though non-limiting embodiment described herein, this polymer material is formed by granules of PET, of which a relevant portion is formed by recycled material.

PET has a melting temperature of approximately 260°C and a maximum air preservation temperature, as generally supplied by the manufacturers, of approximately 180°C.

The threshold value of the PET, that is to say, the minimum level of crystallinity for being able to be dried without giving rise to phenomena of solidification of the material, is approximately 50%, and the initial granular material has a level of crystallinity less than this threshold value.

The installation 1 is provided to supply a transformation machine 100 for the dried granular polymer material.

In the specific embodiment, the transformation machine 100 comprises a mould 101 which is supplied by an extruder 102 which injects the polymer material in the molten state into the mould 101.

The installation 1 comprises a crystallization hopper 10, a heating hopper 20, a drying hopper 30 and a supply hopper 40, all positioned in series relative to each other. The transformation machine 100 is positioned downstream of the supply hopper 40.

In the embodiment described herein, a single hopper is provided for each step of the crystallizing and drying process but two or more hoppers in parallel for one or more such steps can also be provided.

Merely by way of example, for a production capacity of the installation 1 of approximately 1000 kg/h, the crystallizing and drying hoppers 10, 20 may have a volume between 1000 and 1500 litres while the drying and supply hoppers 30, 40 may have a volume between 500 and 1000 litres.

The installation 1 comprises a charging unit 2 which is provided to charge the granular material from one or more big bags 3 of material which is not processed in the crystallization hopper 10 by means of a charging line 4. The big bags 3 may contain the same material or different polymer materials.

The charging unit 2 comprises an aspirator 5 which is connected to the charging line 4 and a separation cyclone 6 which is positioned at the top of the crystallization hopper 10 and at which the granules of polymer material become separated from the flow of transport air and are introduced into the hopper.

The crystallization hopper 10 is connected to a crystallization line 11, through which a first gas flow which is able to crystallize the granular polymer material contained in the crystallization hopper 10 is introduced.

The first gas flow is formed by ambient air which is drawn in along the crystallization line 11 by the action of a fan 12 which is positioned on a discharge pipe 13 of the crystallization hopper 10.

There is provided on the crystallization line 11 a heat pump 14 which provides for heating the first gas flow to a first temperature between 130°C and 150°C, preferably to approximately 140°C, before being introduced into the crystallization hopper 10. The first gas flow is distributed in the mass of granular polymer material to be crystallized as a result of a diffuser 15 which is positioned inside the dehumidification crystallization hopper 10 and, once it has been discharged from the crystallization hopper 10, it is re-introduced into the atmosphere without being recirculated.

There is further mounted inside the crystallization hopper 10 an agitation member 16 which is provided to keep the granular material present therein moving.

The agitation member 16 comprises a shaft which extends axially from above inside the crystallization hopper 10 and which is controlled in terms of rotation by a suitable motor (not illustrated in the Figures), from which a series of radial blades extend.

The heating hopper 20 is positioned directly below the crystallization hopper 10 so that the crystallized granular material can be transferred into the heating hopper 20 directly by falling.

The heating hopper 20 is provided with a heating unit 21 which is able to heat the granular polymer material to a second temperature which is greater than the temperature reached in the crystallization hopper 10, for example, of approximately 180°C.

The heating unit 21 comprises a recirculation circuit 22, through which a second gas flow which is also formed by ambient air in this case is directed.

The recirculation circuit 22 comprises a heating line 23, along which a heater 24 is arranged and which is introduced into the heating hopper 20, leading to a diffuser 25 which is suitably positioned near the base of the heating hopper 20.

The recirculation circuit 22 further comprises a recovery line 26 leading out of the heating hopper 20 and a fan 27 which provides for re-introducing the second gas flow along the heating line 23.

Dehumidification devices for the air being returned from the heating hopper 20 are not provided in the recirculation circuit 22.

Before the heater 24, there leads off from the heating line 23 a transfer line 28 which is connected to the bottom of the heating hopper 20 and which is provided to pneumatically transport the granular polymer material being discharged from the heating hopper 20 as far as an intermediate holding hopper 29, from which a return line 28a which brings back the second gas flow to the fan 27 extends.

The intermediate holding hopper 29 acts as a small storage tank from which the drying hopper 30 is supplied.

The drying hopper 30 is connected to a depressurization circuit 31 which can produce and maintain a predefined level of reduced pressure inside the drying hopper 30, for example, so as to reach a pressure less than 30 mbar, preferably of approximately 10 mbar.

The depressurization circuit 31 comprises a vacuum pump 32 which is connected to a depressurization line 33 in which there are provided a pair of filters 34 and a protection condenser 35.

Upstream and downstream of the drying hopper 30, there are provided a charging unit 30a and a discharging unit 30b of the hopper, respectively.

The charging unit 30a of the drying hopper 30 comprises a tank 36a which has a reduced volume and which is intercepted upstream and downstream by respective closure valves 36b and 36c which generally act as a pressure maintaining element.

Similarly, the discharging unit of the hopper comprises a tank 37a which has a small volume and which is intercepted upstream and downstream by respective closure valves 37b and 37c which are also generally provided to operate as a pressure maintaining element.

Advantageously, the tanks 36a and 37a have a volume of approximately from 30 to 50 litres which is equal to approximately 5% of the volume of the drying hopper 30.

It is made possible to reach such high levels of reduced pressure, equal to an absolute pressure of approximately 10 mbar, by providing upstream and downstream of the drying hopper 30 the tanks 36a and 37a which are in turn made hermetic by the pairs of closure valves 36b, 36c and 37b, 37c.

In the embodiment described herein, a microwave irradiation unit 38 which can heat the granular polymer material contained therein is provided in the drying hopper 30.

Preferably, the microwave irradiation unit 38 comprises one or more power sources of the Magnetron type which is/are suitable for maintaining the temperature of the granular polymer material at the maximum air preservation temperature, for example, in the case of PET, at approximately 180°C.

The supply hopper 40 is connected to a supply circuit 41 for inert gas which is provided with a fan 42 and which is mounted on a supply line 43 which is introduced into the supply hopper 40, leading to a distributor 44, and a return line 45 which brings back the inert gas being discharged from the supply hopper 40 to the fan 42. A heater 46 is arranged along the supply line 43. The supply hopper 40 is connected to the transformation machine 100 by means of a discharge pipe 47 which is fixed to the bottom of the supply hopper 40 by means of a metering valve 48.

A metering device 49 is further connected to the discharge pipe 47 in order to meter, if required, any additives to the granular polymer material which are supplied to the transformation machine 100.

The installation 1 operates as follows in the embodiments described.

The granular polymer material, in this example PET with a low level of crystallinity, is charged into the crystallization hopper 10 by means of the charging unit 2 where it is kept agitated almost constantly by the action of the agitation member 16. The granular polymer material is placed in contact with the first air flow which is introduced into the crystallization hopper 10 through the crystallization line 11 for a sufficient time to increase the level of crystallinity thereof to a value grater than the threshold value of 50%.

The temperature of the first air flow which is introduced into the crystallization hopper 10 is approximately 140°C. Once discharged from the crystallization hopper 10, the first air flow is re-introduced into the environment.

As a result of the action of the first air flow at 140°C and the fact that this air flow is not recirculated, the granular polymer material is also dehumidified until reaching a humidity content of approximately 1000 ppm.

The crystallized (and dehumidified) granular polymer material is then discharged by gravitational force into the heating hopper 20, where it is brought to the maximum air preservation temperature equal to approximately 180°C, as a result of the contact with the second air flow supplied by means of the recirculation circuit 22.

The air introduced into the heating hopper is recirculated without being dried, as a result of which the dehumidification action of the granular polymer material is generally negligible.

At the end of the heating step, the granular polymer material which is crystallized and heated is transferred gradually to the drying hopper 30 using the pneumatic transport supplied by the transfer line 28 as far as the intermediate holding hopper 29.

From here, the material passes to the charging unit 30a of the drying hopper by opening the closure valve 36b which is placed upstream of the tank 36a, while the closure valve 36c which is placed downstream of the tank 36a is kept closed.

The material contained in the tank 36a is then transferred to the drying hopper 30 by opening the closure valve 36c after re-closing the closure valve 36b.

Therefore, the material is transferred into the drying hopper 30 a little at a time in order to prevent excessive variations of the degree of pressure reduction inside the drying hopper 30.

In the drying hopper 30, the residual pressure is maintained at a level less than 30 mbar, preferably at approximately 10 mbar, and this together with the high temperature brings about an effective desorption of the humidity present inside the granules.

After a suitable processing period, for example, of approximately from 40 to 50 minutes, the granular polymer material has a residual humidity content less than approximately 30 ppm.

If necessary, during the drying step, the granular polymer material is post-heated by the microwave irradiation unit 38 in order to maintain the temperature of the material at the temperature of 180°C.

The dried material is then transferred to the supply hopper 40 passing through the discharging unit 30b and precisely through the tank 37a after the alternate closure and opening of the closure valves 37b and 37c.

If desired, the dried granular material can be further post-heated in the supply hopper 40 by a flow of inert gas, for example, nitrogen, which is introduced into the supply hopper 40 by means of the supply circuit 41.

The inert gas is introduced at a temperature of approximately from 220 to 230°C which is greater than the maximum air preservation temperature (180°C) and less by approximately from 30 to 40°C than the melting temperature of PET (260°C).

The granular polymer material is then transferred to the transformation machine 100 through the discharge pipe by actuating the metering valve 48. The installation of the present invention can be constructed as different variants with respect to the preferred embodiment described above.

In a first variant, there is provision for not fitting the supply hopper 40 with the supply circuit 41 for inert gas.

In this case, the granular polymer material is supplied to the transformation machine at the maximum air preservation temperature which the granular polymer material already has when it reaches the supply hopper 40, as a result of the post-heating carried out by the microwave irradiation unit 38.

In a second variant, there is provision for the supply circuit 41 to be supplied with air and with inert gas.

In this case, the granular polymer material is also supplied to the transformation machine at the maximum air preservation temperature.

In this case, it is possible to heat the granular polymer material contained in the supply hopper if it tends to reduce the temperature thereof during the dwell time thereof or if it has not been heated sufficiently in the drying hopper so as to integrate the heating of the microwave irradiation.

In a third variant, there is provision for eliminating the microwave irradiation unit 38.

In this case, the post-heating step is carried out only in the supply hopper 40, where it can be carried out with air or with inert gas as a function of the desired final temperatures.

As a result of the process and the installation of the present invention, it is possible to obtain excellent results in terms of drying from granular polymer material with a low level of crystallinity.

Furthermore, the installation can change production within very short times, approximately two hours against the six hours required in conventional drying installations (for the same production capacity).

Another important advantage involves the fact that, when the transformation machine is supplied with a granular polymer material at a temperature greater than the maximum air preservation temperature, the energy efficiency of the transformation machine is increased.

If, then, the granular polymer material is supplied to an extruder, the extruder can be sized with smaller power levels and a smaller spatial requirement so as to also improve the layout of the installation in addition to the energy efficiency.

## Claims

1. An installation (1) configured for crystallizing and drying granular polymer material with a low level of crystallinity, that is a level of crystallinity less than a threshold value below which the granular polymer material can involve the formation of blocks of granules during the drying process, wherein the level of crystallinity is defined as the weight fraction of polymer in the crystalline state with respect to the total polymer mass, comprising:
- at least one crystallization hopper (10) which is connected to a crystallization line (11), via which there is introduced into the crystallization hopper (10) a first gas flow which is heated to a first temperature which is suitable for increasing the level of crystallinity of the granular polymer material;
- an agitation member (16) which is associated with the crystallization hopper (10) and which is provided to maintain the granular material in an agitated state inside the crystallization hopper (10);
- at least one heating hopper (20) which is arranged downstream of the crystallization hopper (10) and which is provided with a heating unit (21) which is provided to heat the crystallized granular polymer material to a second temperature which is greater than the first temperature,
- at least one drying hopper (30) which is arranged downstream of the heating hopper (20) and which is connected to a depressurization circuit (31) which is provided to obtain in the drying hopper a predefined level of pressure reduction and to dry the granular polymer material,
- at least one supply hopper (40) which is arranged downstream of the drying hopper and upstream of a transformation machine (100) for the granular polymer material.

2. An installation according to claim 1, wherein the agitation member (16) comprises a bladed shaft which rotates inside the crystallization hopper (10).

3. An installation according to claim 1 or 2, wherein the crystallization line (11) is supplied with air which is taken from the environment and which does not come from the crystallization hopper (10).

4. An installation according to any one of the preceding claims, wherein the heating unit (21) comprises a recirculation circuit (22), through which a second gas flow is first introduced into the heating hopper (20), then is recovered at the discharge from the heating hopper (20) and is finally recirculated in the same heating hopper (20) after being heated to the second temperature.

5. An installation according to claim 4, wherein there are provided upstream and downstream of the drying hopper (30) a charging unit (30a) and a discharging unit (30b) of the drying hopper (30), respectively, each of the charging unit and discharging unit (30a; 30b) comprising a respective tank (36a; 37a) which is intercepted upstream and downstream by respective closure valves (36b, 36c; 37b, 37c).

6. An installation according to claim 5, wherein the ratio between the volume of each of the tanks (36a; 37a) and the volume of the drying hopper (30) is between 0.02 and 0.15.

7. An installation according to claim 5 or 6, wherein the charging unit and discharging unit form elements for maintaining the pressure of the drying hopper (30).

8. A process for crystallizing and drying granular polymer material with a low level of crystallinity, that is a level of crystallinity less than a threshold value below which the granular polymer material can involve the formation of blocks of granules during the drying process, wherein the level of crystallinity is defined as the weight fraction of polymer in the crystalline state with respect to the total polymer mass, comprising the steps of:
- maintaining in an agitated state the granular polymer material with a low level of crystallinity and, at the same time, introducing into the granular polymer material a first gas flow having a first temperature so as to increase the level of crystallinity of the granular polymer material up to a value greater than a predefined threshold value below which the granular polymer material is not suitable for being subjected to drying,
- heating the crystallized granular polymer material to a second temperature which is greater than the first temperature,
- drying the crystallized and heated granular polymer material by applying a predefined level of reduced pressure;
- transferring the dried granular polymer material into a supply hopper (40) which is provided upstream of a transformation machine (100) of the granular polymer material.

9. A process according to claim 8, wherein the granular polymer material is based on PET.

10. A process according to claim 8 or 9, wherein the granular polymer material, during or after the drying step, is subjected to a post-heating step.

## Patentansprüche

1. Anlage (1), die zum Kristallisieren und Trocknen von Polymergranulat-Material mit einem niedrigen Kristallinitätsgrad, d.h. einem Kristallinitätsgrad, konfiguriert ist, der unter einem Schwellenwert liegt, unterhalb dessen das Polymergranular-Material die Bildung von Granulatblöcken während des Trocknungsprozesses umfassen kann, wobei der Kristallinitätsgrad als Gewichtsanteil des Polymers im kristallinen Zustand in Bezug auf die gesamte Polymermasse definiert ist, umfassend:
- zumindest einen Kristallisationstrichter (10), der mit einer Kristallisationsleitung (11) verbunden ist, mittels der in den Kristallisationstrichter (10) ein erster Gasstrom eingeleitet wird, der auf eine erste Temperatur erhitzt ist, die zum Erhöhen des Kristallinitätsgrads des Polymergranulat-Materials geeignet ist;
- ein Rührelement (16), das mit dem Kristallisationstrichter (10) verbunden ist und das dazu vorgesehen ist, das Granulatmaterial im Kristallisationstrichter (10) in gerührten Zustand zu halten;
- zumindest einen Heiztrichter (20), der stromabwärts des Kristallisationstrichters (10) angeordnet ist und mit einer Heizeinheit (21) versehen ist, die dazu vorgesehen ist, das kristallisierte Polymergranulat-Material auf eine zweite Temperatur zu erhitzen, die höher als die erste Temperatur ist,
- zumindest einen Trocknungstrichter (30), der stromabwärts des Heiztrichters (20) angeordnet ist und an einen Druckentlastungskreislauf (31) angeschlossen ist, der dazu vorgesehen ist, im Trocknungstrichter einen vordefinierten Druckabbau zu erreichen und das Polymergranulat-Material zu trocknen,
- zumindest einen Zufuhrtrichter (40), der stromabwärts des Trocknungstrichters und stromaufwärts einer Transformationsmaschine (100) für das Polymergranulat-Material angeordnet ist.

2. Anlage nach Anspruch 1, wobei das Rührelement (16) eine mit Schaufeln versehene Welle umfasst, die sich im Inneren des Kristallisationstrichters (10) dreht.

3. Anlage nach Anspruch 1 oder 2, wobei der Kristallisationsleitung (11) Luft zugeführt wird, die der Umgebung entnommen wird und nicht aus dem Kristallisationstrichter (10) stammt.

4. Anlage nach einem der vorhergehenden Ansprüche, wobei die Heizeinheit (21) einen Umwälzkreislauf (22) umfasst, durch den ein zweiter Gasstrom zunächst in den Heiztrichter (20) eingeleitet wird, danach am Auslass des Heiztrichters (20) zurückgewonnen wird und schließlich nach Erhitzen auf die zweite Temperatur in denselben Heiztrichter (20) zurückgeführt wird.

5. Anlage nach Anspruch 4, wobei stromaufwärts und stromabwärts des Trocknungstrichters (30) jeweils eine Ladeeinheit (30a) und eine Entladeeinheit (30b) des Trocknungstrichters (30) vorgesehen sind, wobei sowohl die Ladeeinheit als auch die Entladeeinheit (30a; 30b) jeweils einen Tank (36a; 37a) umfassen, der stromaufwärts und stromabwärts des Trocknungstrichters durch jeweilige Verschlussventile (36b, 36c; 37b, 37c) abgesperrt ist.

6. Anlage nach Anspruch 5, wobei das Verhältnis zwischen dem Volumen jedes der Tanks (36a; 37a) und dem Volumen des Trockentrichters (30) zwischen 0,02 und 0,15 liegt.

7. Anlage nach Anspruch 5 oder 6, wobei die Ladeeinheit und die Entladeeinheit Elemente zum Aufrechterhalten des Drucks des Trockentrichters (30) bilden.

8. Verfahren zum Kristallisieren und Trocknen von Polymergranulat-Material mit einem niedrigen Kristallinitätsgrad, d. h. einem Kristallinitätsgrad, der unter einem Schwellenwert liegt, unterhalb dessen das Polymergranular-Material die Bildung von Granulatblöcken während des Trocknungsprozesses umfassen kann, wobei der Kristallinitätsgrad als Gewichtsanteil des Polymers im kristallinen Zustand in Bezug auf die gesamte Polymermasse definiert ist,
das folgende Schritte umfasst:
- Halten des Polymergranulat-Materials mit niedrigem Kristallinitätsgrad in einem bewegten Zustand, und gleichzeitig Einleiten eines ersten Gasstroms mit einer ersten Temperatur in das Polymergranulat-Material, um den Kristallinitätsgrad des Polymergranulat-Materials auf einen Wert zu erhöhen, der größer als ein vordefinierter Schwellenwert ist unterhalb dessen das Polymergranulat-Material nicht zum Trocknen geeignet ist,
- Erhitzen des kristallisierten Polymergranulat-Materials auf eine zweite Temperatur, die höher als die erste Temperatur ist,
- Trocknen des kristallisierten und erhitzten Polymergranulat-Materials durch Anlegen eines vordefinierten Druckabbaus;
- Überführen des getrockneten Polymergranulat-Materials in einen Zufuhrtrichter (40), der stromaufwärts einer Transformationsmaschine (100) für das Polymergranulat-Material vorgesehen ist.

9. Verfahren nach Anspruch 8, wobei das Polymergranulat-Material auf **PET** basiert.

10. Verfahren nach Anspruch 8 oder 9, wobei das Polymergranulat-Material während oder nach dem Trocknungsschritt einem Nacherhitzungsschritt unterzogen wird

## Revendications

1. Installation (1) configurée pour la cristallisation et le séchage d'un matériau polymère granulaire présentant un faible niveau de cristallinité, c'est-à-dire un niveau de cristallinité inférieur à une valeur seuil en dessous de laquelle le matériau polymère granulaire peut entraîner la formation de blocs de granulés pendant le processus de séchage, le niveau de cristallinité étant défini comme la fraction pondérale du polymère à l'état cristallin par rapport à la masse totale du polymère, comprenant :
- au moins une trémie de cristallisation (10) reliée à une ligne de cristallisation (11), par laquelle est introduit dans la trémie de cristallisation (10) un premier flux de gaz chauffé à une première température appropriée pour augmenter le niveau de cristallinité du matériau polymère granulaire ;
- un élément d'agitation (16) associé à la trémie de cristallisation (10) et destiné à maintenir le matériau granulaire dans un état d'agitation à l'intérieur de la trémie de cristallisation (10) ;
- au moins une trémie de chauffage (20) disposée en aval de la trémie de cristallisation (10) et dotée d'une unité de chauffage (21) destinée à chauffer le matériau polymère granulaire cristallisé à une seconde température supérieure à la première,
- au moins une trémie de séchage (30) disposée en aval de la trémie de chauffage (20) et reliée à un circuit de dépressurisation (31) prévu pour obtenir dans la trémie de séchage un niveau prédéfini de réduction de pression et pour sécher le matériau polymère granulaire,
- au moins une trémie d'alimentation (40) disposée en aval de la trémie de séchage et en amont d'une machine de transformation (100) du matériau polymère granulaire.

2. Installation selon la revendication 1, dans laquelle l'élément d'agitation (16) comprend un arbre à pales qui tourne à l'intérieur de la trémie de cristallisation (10).

3. Installation selon la revendication 1 ou 2, dans laquelle la ligne de cristallisation (11) est alimentée par de l'air prélevé dans l'environnement et ne provenant pas de la trémie de cristallisation (10).

4. Installation selon l'une quelconque des revendications précédentes, dans laquelle l'unité de chauffage (21) comprend un circuit de recirculation (22), à travers lequel un deuxième flux de gaz est d'abord introduit dans la trémie de chauffage (20), puis est récupéré à la sortie de la trémie de chauffage (20) et est finalement recirculé dans la même trémie de chauffage (20) après avoir été chauffé à la deuxième température.

5. Installation selon la revendication 4, dans laquelle sont prévus en amont et en aval de la trémie de séchage (30) respectivement une unité de chargement (30a) et une unité de déchargement (30b) de la trémie de séchage (30), chacune de l'unité de chargement et de l'unité de déchargement (30a ; 30b) comprenant un réservoir respectif (36a ; 37a) qui est intercepté en amont et en aval par des vannes d'obturation respectives (36b, 36c ; 37b, 37c).

6. Installation selon la revendication 5, dans laquelle le rapport entre le volume de chacun des réservoirs (36a ; 37a) et le volume de la trémie de séchage (30) est compris entre 0,02 et 0,15.

7. Installation selon la revendication 5 ou 6, dans laquelle l'unité de chargement et l'unité de déchargement forment des éléments permettant de maintenir la pression de la trémie de séchage (30).

8. Procédé de cristallisation et de séchage d'un matériau polymère granulaire présentant un faible niveau de cristallinité, c'est-à-dire un niveau de cristallinité inférieur à une valeur seuil en dessous de laquelle le matériau polymère granulaire peut entraîner la formation de blocs de granules pendant le processus de séchage, le niveau de cristallinité étant défini comme la fraction pondérale de polymère à l'état cristallin par rapport à la masse totale de polymère, comprenant les étapes suivantes :
- maintenir dans un état agité le matériau polymère granulaire ayant un faible niveau de cristallinité et, en même temps, introduire dans le matériau polymère granulaire un premier flux de gaz ayant une première température de manière à augmenter le niveau de cristallinité du matériau polymère granulaire jusqu'à une valeur supérieure à une valeur seuil prédéfinie en dessous de laquelle le matériau polymère granulaire n'est pas apte à être soumis à un séchage,
- chauffer le matériau polymère granulaire cristallisé à une seconde température supérieure à la première,
- le séchage du matériau polymère cristallisé et chauffé en appliquant un niveau prédéfini de pression réduite ;
- transférer le matériau polymère granulaire séché dans une trémie d'alimentation (40) située en amont d'une machine de transformation (100) du matériau polymère granulaire.

9. Procédé selon la revendication 8, dans lequel le matériau polymère granulaire est à base de PET.

10. Procédé selon la revendication 8 ou 9, dans lequel le matériau polymère granulaire, pendant ou après l'étape de séchage, est soumis à une étape de post-chauffage.
